# EUROPÄISCHE PATENTSCHRIFT

(11) **EP 3 831 101 B1**
(45) Veröffentlichungstag und Bekanntmachung des Hinweises auf die Patenterteilung: **19.03.2025**
(21) Anmeldenummer: 19746072.8
(22) Anmeldetag: 25.07.2019
(51) Int. Cl.: H04L 9/08, H04L 9/40, H04W 12/041

(54) **VERFAHREN ZUM FAHRZEUGINTERNEN VERWALTEN VON KRYPTOGRAPHISCHEN SCHLÜSSELN**
METHOD FOR THE VEHICLE-INTERNAL MANAGEMENT OF CRYPTOGRAPHIC KEYS
PROCÉDÉ POUR LA GESTION INTERNE AU VÉHICULE DE CLÉS CRYPTOGRAPHIQUES

(30) Priorität: 03.08.2018 DE 102018213038
(43) Veröffentlichungstag der Anmeldung: 09.06.2021
(73) Patentinhaber: Continental Automotive Technologies GmbH, 30175 Hannover (DE)
(72) Erfinder: STÖTTINGER, Marc Sebastian Patric, 60488 Frankfurt am Main (DE); KLAPPER, Patrick Thomas Michael, 60488 Frankfurt am Main (DE)
(74) Vertreter: Continental Corporation
(86) Internationale Anmeldenummer: PCT/EP2019/070139
(87) Internationale Veröffentlichungsnummer: WO 2020/025464

(56) Entgegenhaltungen:
- DE-A1- 102011 002 713
- DE-A1- 102012 209 445
- DE-A1- 102015 219 989
- US-B1- 10 009 325

## Beschreibung

Die Erfindung betrifft ein Verfahren zum fahrzeuginternen Verwalten von kryptografischen Schlüsseln.

Darüber hinaus betrifft die Erfindung ein fahrzeuginternes Kommunikationssystem mit einer Schlüsselerzeugungseinrichtung, einer Kontrolleinheit und zumindest einer Steuerungseinrichtung.

Innerhalb von Fahrzeugen werden kryptografische Schlüssel zur kryptografischen Absicherung der fahrzeuginternen Kommunikation zwischen unterschiedlichen fahrzeuginternen Steuerungseinrichtungen und zur kryptografischen Absicherung der Integrität der Software der fahrzeuginternen Steuerungseinrichtungen genutzt.

Damit eine entsprechende kryptografische Absicherung über die Lebensdauer eines Fahrzeugs aufrechterhalten werden kann, ist regelmäßig die Generierung und Verteilung neuer kryptografischer Schlüssel innerhalb eines fahrzeuginternen Kommunikationssystems notwendig. In diesem Zusammenhang hat sich der Ausdruck Rekeying durchgesetzt.

Zur Einbringung von neuem Schlüsselmaterial in ein fahrzeuginternes Kommunikationssystem sind unterschiedliche Ansätze bekannt. Beispielsweise werden kryptografische Schlüssel durch einen Techniker in einer Werkstatt mittels eines Testgeräts direkt in das fahrzeuginterne Kommunikationssystem eingespielt. Darüber hinaus ist es bekannt, einen die Schlüsselgenerierung veranlassenden Befehl an eine schlüsselgenerierende fahrzeuginterne Steuerungseinrichtung zu senden. Dies kann beispielsweise durch einen autorisierten Techniker in einer Werkstatt oder durch einen Backend über eine gesicherte Ende-zu-Ende-Verbindung zu dem Fahrzeug erfolgen. Ferner ist es bekannt, Schlüsselmaterial direkt von einem Backend über eine gesicherte Ende-zu-Ende-Verbindung an das Fahrzeug zu senden.

Die bekannten Lösungen bringen jedoch teilweise erhebliche Probleme mit sich. Beim Einspielen von Schlüsselmaterial oder die Schlüsselgenerierung veranlassenden Befehlen durch einen Techniker muss das Fahrzeug physisch zur Verfügung gestellt werden. Es kommt somit zu einer Nutzungsbeeinträchtigung für den Benutzer des Fahrzeugs. Wenn das Rekeying im Rahmen der regelmäßig durchzuführenden Wartungsarbeiten am Fahrzeug erfolgt, kann es zu langen Nutzungszeiträumen von Schlüsseln kommen, sodass die interne Kommunikationssicherheit nicht ohne Weiteres gewährleistet werden kann. Darüber hinaus kann nicht ausgeschlossen werden, dass durch Dritte Einfluss auf das mit der Einspielung von Schlüsselmaterial befasste Werkstattpersonal genommen wird.

Beim Übertragen von Schlüsselmaterial oder die Schlüsselgenerierung veranlassenden Steuerungsbefehlen unter Verwendung einer gesicherten Internetverbindung besteht stets ein Kompromittierungsrisiko, sodass auch auf diese Weise kein sicheres Rekeying umgesetzt werden kann.

DE 102015219989 A1 zeigt eine Auffrischung eines symmetrischen kryptographischen Schlüssels, zwischen einem ersten Knoten und einem zweiten Knoten eines Kommunikationssystems. Durch ein Triggerereignis wird die Auffrischung eingeleitet, wobei durch die Knoten jeweils eine geheime Bitfolge generier wird. Das bisherige Geheimnis wird mit der Bitfolge zu einem zweiten Geheimnis kombiniert und ersetzt fortan das bisherige Geheimnis.

DE 102012209445 A1 zeigt ein Verfahren zur sicheren Datenübertragung. Dabei werden ein erster und ein zweiter Schlüssel miteinander verglichen und bei Übereinstimmung wird der Zugang zu einem Klienten aufgebaut.

Die der Erfindung zugrundeliegende Aufgabe besteht somit darin, die Sicherheit beim Generieren und Bereitstellen von kryptografischen Schlüsseln für fahrzeuginterne Steuerungsgeräte zu steigern.

Die der Erfindung zugrundeliegende Aufgabe wird gelöst durch ein Verfahren der eingangs genannten Art, wobei im Rahmen des erfindungsgemäßen Verfahrens einer fahrzeuginternen Schlüsselerzeugungseinrichtung zumindest ein Geheimnis bereitgestellt wird und zumindest ein neuer kryptografischer Schlüssel durch die fahrzeuginterne Schlüsselerzeugungseinrichtung auf Grundlage des zumindest einen Geheimnisses erzeugt wird.

Die Erfindung macht sich die Erkenntnis zunutze, dass durch die fahrzeuginterne Schlüsselerzeugung die Notwendigkeit der direkten Schlüsseleinbringung, beispielsweise über Techniker oder über ein Backend, nicht notwendig ist, sodass ein entsprechendes Kompromittierungsrisiko eliminiert wird. Das zumindest eine in das fahrzeuginterne Kommunikationssystem einzubringende Geheimnis kann ohne die Kenntnis ergänzender Erzeugungsparameter, wie beispielsweise Salt-Parameter oder Seed-Parameter, nicht zur Schlüsselerzeugung genutzt werden. Ein auf den Bereitstellungsvorgang des zumindest einen Geheimnisses gerichteter Angriff ist somit zur Beeinträchtigung der Kommunikationssicherheit innerhalb des Fahrzeugs ungeeignet. Die Sicherheit des Rekeying-Prozesses wird auf diese Weise erheblich gesteigert.

Die Schlüsselerzeugungseinrichtung nutzt beispielsweise eine Schlüsselableitfunktion, wie etwa PBKDF2, zum Erzeugen des zumindest einen Schlüssels. Das zumindest eine Geheimnis kann beispielsweise ein geheimer Schlüssel, ein Passwort oder eine Passphrase sein. Das zumindest eine Geheimnis kann der Schlüsselerzeugungseinrichtung beispielsweise initial aufgespielt werden und/oder mittels eines Schlüsselaustausch- und/oder eines Schlüsseleinigungsverfahrens, wie etwa Diffie-Hellman oder Elgamal, übermittelt werden. Der fahrzeuginternen Schlüsselerzeugungseinrichtung können auch mehrere Geheimnisse bereitgestellt werden. Die Schlüsselerzeugungseinrichtung kann auf Grundlage des einen oder der mehreren Geheimnisse auch mehrere neue kryptografische Schlüssel erzeugen.

Das erfindungsgemäße Verfahren umfasst, dass der zumindest eine neue kryptografische Schlüssel zumindest einer fahrzeuginternen Steuerungseinrichtung bereitgestellt wird. Alternativ oder zusätzlich wird der zumindest eine neue kryptografische Schlüssel durch die fahrzeuginterne Steuerungseinrichtung bei kryptografischen und/oder nicht-kryptografischen Sicherheitsmaßnahmen verwendet. Der zumindest eine neue kryptografische Schlüssel kann mittels eines Schlüsselverteilvorgangs, insbesondere unter Verwendung eines Key-Exchange-Algorithmus, auch mehreren fahrzeuginternen Steuerungseinrichtungen bereitgestellt oder unter diesen vereinbart werden, wobei die mehreren fahrzeuginternen Steuerungseinrichtungen den zumindest einen neuen kryptografischen Schlüssel dann bei kryptografischen und/oder nicht-kryptografischen Sicherheitsmaßnahmen verwenden können. Die fahrzeuginterne Steuerungseinrichtung kann beispielsweise eine Electronic Control Unit (ECU) sein. Eine kryptografische Sicherheitsmaßnahme betrifft beispielsweise das Verschlüsseln von Nachrichten. Eine nicht-kryptografische Sicherheitsmaßnahme betrifft beispielsweise das Signieren von Nachrichten. Beispielsweise werden der fahrzeuginternen Schlüsselerzeugungseinrichtung eine oder mehrere Geheimnisse pro fahrzeuginterner Steuerungseinrichtung bereitgestellt, sodass einrichtungsspezifische kryptografische Schlüssel auf Grundlage des jeweiligen Geheimnisses oder der jeweiligen Geheimnisse erzeugt werden können, welche den jeweiligen fahrzeuginternen Steuerungseinrichtungen zugeordnet sind.

Darüber hinaus ist erfindungsgemäß vorgesehen, dass das Erzeugen des zumindest einen neuen kryptografischen Schlüssels und/oder das Bereitstellen des zumindest einen neuen kryptografischen Schlüssels durch ein Schlüsselaustauschereignis oder eine Kombination von Schlüsselaustauschereignissen ausgelöst wird und/oder selbsttätig erfolgt. Das Schlüsselaustauschereignis kann ein Sicherheitsereignis (security incident) sein, wie etwa ein Firewall-Alarm, eine Eindringdetektion (intrusion detection), ein fehlerhafter Identitätscheck oder eine Zertifikatsregelverletzung (false identity proof via own signed backend certificate) sein. Das Schlüsselaustauschereignis kann eine Umgebungsveränderung (environmental change) sein, etwa die Änderung der Position, die Änderung der Route und/oder das Überschreiten physikalischer Grenzparameter. Ferner kann das Schlüsselaustauschereignis auch eine Zeitüberschreitung sein. Das Schlüsselaustauschereignis kann außerdem eine fahrzeuginterne Änderung (vehicle internal change) sein, welche etwa über eine Anomalie-Detektion (anomaly detection) festgestellt werden kann.

Das erfindungsgemäße Verfahren umfasst zudem, dass das Schlüsselaustauschereignis von einer fahrzeuginternen Kontrolleinheit erfasst wird, wobei die Kontrolleinheit das Erzeugen des zumindest einen neuen kryptografischen Schlüssels und/oder das Bereitstellen des zumindest einen neuen kryptografischen Schlüssels initiiert. Die fahrzeuginterne Kontrolleinheit fungiert somit insbesondere als Rekeying-Manager. Vorzugsweise erfasst das Verfahren das Erfassen eines Schlüsselaustauschereignisses oder einer Kombination von Schlüsselaustauschereignissen durch die fahrzeuginterne Kontrolleinheit. Die Schlüsselerzeugungseinrichtung und die Kontrolleinheit können separate elektronische Module sein oder in einem gemeinsamen elektronischen Modul zusammengefasst sein.

In einer anderen Ausführungsform des erfindungsgemäßen Verfahrens kontrolliert die Kontrolleinheit die durch die Schlüsselerzeugungseinrichtung durchgeführte Schlüsselerzeugung und/oder passt die durch die Schlüsselerzeugungseinrichtung durchgeführte Schlüsselerzeugung an. Erfindungsgemäß kontrolliert die Kontrolleinheit die Bereitstellung und/oder die Verteilung von neuen kryptografischen Schlüsseln an eine oder mehrere Steuerungseinrichtungen und/oder passt die Bereitstellung und/oder die Verteilung von neuen kryptografischen Schlüsseln an eine oder mehrere Steuerungseinrichtungen an. Dadurch, dass die Kontrolleinheit ein Anpassen der Schlüsselerzeugung und/oder ein Anpassen der Schlüsselverteilung erlaubt, ist der Rekeying-Vorgang dynamisch veränderbar. Vorzugsweise gibt die Kontrolleinheit der Schlüsselerzeugungseinrichtung die für die Schlüsselerzeugung zu verwendenden Geheimnisse vor. Durch eine Änderung der Vorgabe kann erreicht werden, dass ein oder mehrere Geheimnisse beispielsweise nach Feststellung von deren Kompromittierung, nicht länger zur Schlüsselerzeugung verwendet werden. Darüber hinaus kann die Kontrolleinheit der Schlüsselerzeugungseinrichtung die im Rahmen der Schlüsselableitungsfunktion zu verwendenden Parameter vorgeben. Durch eine Veränderung der Parameter können somit auf Grundlage eines unveränderten Geheimnisses neue Schlüssel erzeugt werden.

In einer bevorzugten Ausführungsform des erfindungsgemäßen Verfahrens werden einem fahrzeugexternen Computersystem Schlüsselerzeugungsparameter bereitgestellt, welche es dem fahrzeugexternen Computersystem erlauben, zumindest einen kryptografischen Schlüssel zu erzeugen, welcher von einer fahrzeuginternen Steuerungseinrichtung verwendet wird. Alternativ oder zusätzlich umfasst das Verfahren das Erzeugen zumindest eines kryptografischen Schlüssels, welcher von einer fahrzeuginternen Steuerungseinrichtung verwendet wird, durch das externe Computersystem. Das externe Computersystem kann beispielsweise ein Backend sein, welcher von dem Fahrzeughersteller oder einem Drittanbieter betrieben wird. Das Bereitstellen der Schlüsselerzeugungsparameter kann beispielsweise das Senden der Schlüsselerzeugungsparameter von dem fahrzeuginternen Kommunikationssystem an das fahrzeugexterne Computersystem umfassen, insbesondere unter Verwendung einer gesicherten Internetverbindung. Insbesondere ist dem fahrzeugexternen Computersystem auch das zumindest eine Geheimnis bekannt, welches der fahrzeuginternen Schlüsselerzeugungseinrichtung zur Schlüsselerzeugung bereitgestellt wurde. Auf Grundlage der bereitgestellten Schlüsselerzeugungsparameter und des zumindest einen Geheimnisses ist das fahrzeugexterne Computersystem dazu in der Lage, entsprechende kryptografische Schlüssel zu erzeugen, welche auch im Rahmen des fahrzeuginternen Kommunikationssystems genutzt werden.

Außerdem ist ein erfindungsgemäßes Verfahren vorteilhaft, bei welchem Autorisierungsinformationen für die fahrzeuginterne Schlüsselerzeugungseinrichtung bereitgestellt werden und das Erzeugen des zumindest einen neuen kryptografischen Schlüssels durch die fahrzeuginterne Schlüsselerzeugungseinrichtung auch auf Grundlage der Autorisierungsinformationen erfolgt. Die Autorisierungsinformationen können auch als credentials bezeichnet werden und können beispielsweise einen Zähler, Token und/oder Berechtigungsnachweise umfassen. Insbesondere werden die Autorisierungsinformationen der Schlüsselerzeugungseinrichtung von der Kontrolleinheit zur Verfügung gestellt.

Bevorzugt ist eine Schlüsselerzeugungseinrichtung vorhanden, wobei die erfindungsgemäße Schlüsselerzeugungseinrichtung eine Recheneinheit aufweist, welche dazu eingerichtet ist, auf Grundlage des zumindest einen Geheimnisses zumindest einen neuen kryptografischen Schlüssel zu erzeugen. Vorzugsweise ist die Schlüsselerzeugungseinrichtung dazu eingerichtet, in dem Verfahren zum fahrzeuginternen Verwalten von kryptografischen Schlüsseln nach einer der vorstehend beschriebenen Ausführungsformen verwendet zu werden. Hinsichtlich der Vorteile und Modifikationen der erfindungsgemäßen Schlüsselerzeugungseinrichtung wird auf die Vorteile und Modifikationen des erfindungsgemäßen Verfahrens zum fahrzeuginternen Verwalten von kryptografischen Schlüsseln verwiesen.

Die der Erfindung zugrundeliegende Aufgabe wird ferner durch ein fahrzeuginternes Kommunikationssystem der eingangs genannten Art gelöst, wobei das erfindungsgemäße Kommunikationssystem dazu eingerichtet ist, das Verfahren zum fahrzeuginternen Verwalten von kryptografischen Schlüsseln nach einer der vorstehend beschriebenen Ausführungsformen auszuführen. Hinsichtlich der Vorteile und Modifikationen des erfindungsgemäßen Kommunikationssystems wird auf die Vorteile und Modifikationen des erfindungsgemäßen Verfahrens zum fahrzeuginternen Verwalten von kryptografischen Schlüsseln verwiesen.

Nachfolgend werden bevorzugte Ausführungsformen der Erfindung unter Bezugnahme auf die beiliegenden Zeichnungen näher erläutert und beschrieben. Dabei zeigen:
- Fig. 1: ein Ausführungsbeispiel des erfindungsgemäßen Kommunikationssystems in einer schematischen Darstellung;
- Fig. 2: ein weiteres Ausführungsbeispiel des erfindungsgemäßen Kommunikationssystems in einer schematischen Darstellung;
- Fig. 3: ein weiteres Ausführungsbeispiel des erfindungsgemäßen Kommunikationssystems in einer schematischen Darstellung; und
- Fig. 4: ein schematisches Ablaufdiagramm des erfindungsgemäßen Verfahrens.

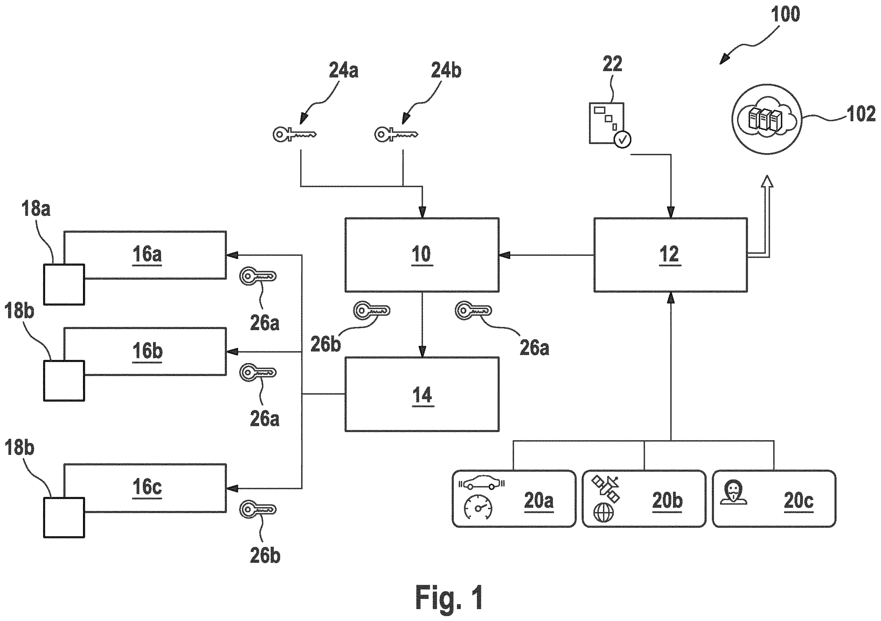

Gemäß der Fig. 1 umfasst das fahrzeuginterne Kommunikationssystem 100 eine Schlüsselerzeugungseinrichtung 10, eine Kontrolleinheit 12 und mehrere, nämlich drei Steuerungseinrichtungen 18a-18c.

Die Schlüsselerzeugungseinrichtung 10 weist eine Speichereinrichtung zum Speichern von bereitgestellten Geheimnissen 24a, 24b auf, wobei die Geheimnisse 24a, 24b beispielsweise geheime Schlüssel, Passwörter oder Passphrasen sein können. Die Bereitstellung der Geheimnisse 24a, 24b für die Schlüsselerzeugungseinrichtung 10 kann beispielsweise durch ein initiales Aufspielen während der Implementierung des Kommunikationssystem 100 und/oder nachträglich mittels eines Schlüsselaustausch- und/oder eines Schlüsseleinigungsverfahrens, wie etwa Diffie Hellmann oder Elgamal, erfolgen.

Der Schlüsselerzeugungseinrichtung 10 werden über die Kontrolleinheit 12 außerdem Autorisierungsinformationen 22 bereitgestellt. Die Autorisierungsinformationen 22 können auch als "credentials" bezeichnet werden und umfassen beispielsweise einen Zähler, einen Token und/oder Berechtigungsnachweise.

Die Schlüsselerzeugungseinrichtung 10 weist eine Recheneinheit auf, welche auf Grundlage der Geheimnisse 24a, 24b und der Autorisierungsinformationen 22 kryptographische Schlüssel 26a, 26b erzeugt. Die erzeugten kryptographischen Schlüssel 26a, 26b werden über eine Verteileinrichtung 14 unter Anwendung von Key-Exchange-Algorithmen mehreren fahrzeuginternen Steuerungseinrichtungen 18a-18c bereitgestellt. In dem dargestellten Ausführungsbeispiel erzeugt die Schlüsselerzeugungseinrichtung 10 auf Grundlage des Geheimnisses 24a den kryptographischen Schlüssel 26a und auf Grundlage des Geheimnisses 24b den kryptographischen Schlüssel 26b. Der kryptographische Schlüssel 26a wird den fahrzeuginternen Steuerungseinrichtungen 18a, 18b bereitgestellt. Der kryptographische Schlüssel 26b wird der fahrzeuginternen Steuerungseinrichtung 18c bereitgestellt.

Die fahrzeuginternen Steuerungseinrichtungen 18a-18c sind als electronic control units (ECU) ausgebildet und verwenden den bereitgestellten kryptographischen Schlüssel 26a, 26b im Rahmen von kryptographischen und nicht-kryptographischen Sicherheitsmaßmaßen 16a-16c, wie etwa dem Verschlüsseln oder Signieren von Nachrichten.

Das Erzeugen der kryptographischen Schlüssel 26a, 26b und das Bereitstellen der erzeugten kryptographischen Schlüssel 26a, 26b wird durch ein Schlüsselaustauschereignis 20a-20c oder eine Kombination von Schlüsselaustauschereignissen 20a-20c ausgelöst und erfolgt bei Eintritt des Schlüsselaustauschereignisses 20a-20c oder bei Eintritt der Kombination von Schlüsselaustauschereignissen 20a-20c selbsttätig.

Das Schlüsselaustauschereignis 20a-20c wird von einer fahrzeuginternen Kontrolleinheit 12 erfasst, sodass die Kontrolleinheit 12 auch das Erzeugen der neuen kryptographischen Schlüssel 26a, 26b sowie das Bereitstellen der erzeugten kryptographischen Schlüssel 26a, 26b initiiert. Darüber hinaus dient die Kontrolleinheit 12 zum Kontrollieren der durch die Schlüsselerzeugungseinrichtung 10 durchgeführten Schlüsselerzeugung und zum Anpassen der durch die Schlüsselerzeugungseinrichtung 10 durchgeführten Schlüsselerzeugung.

Das Schlüsselaustauschereignis 20a-20c kann eine fahrzeuginterne Änderung 20a (vehicle internal change), eine Umgebungsveränderung 20b (environmental change) oder ein Sicherheitsereignis 20c (security incident) sein. Die fahrzeuginterne Änderung 20a kann durch eine Anomalie-Detektion (anomaly dectection) erfasst werden. Die Umgebungsveränderung 20b kann beispielsweise die Änderung der Position des Fahrzeugs, die Änderung der geplanten Fahrtroute oder das Überschreiten von physikalischen Grenzparametern betreffen. Ferner können Umgebungsveränderung 20b auch zeitbasierte Änderungen oder Grenzen betreffen. Das Sicherheitsereignis 20c kann beispielsweise ein Firewall-Alarm, eine Eindringdetektion (intrusion detection), ein fehlerhafter Identitätscheck oder eine Zertifikatsregelverletzung (false identity proof via own signed backend certificate) sein.

Das fahrzeuginterne Kommunikationssystem 100 ist ferner dazu eingerichtet, einem fahrzeugexternen Computersystem 102 Schlüsselerzeugungsparameter bereitzustellen, beispielsweise über eine Internetverbindung. Die Schlüsselerzeugungsparameter erlauben es dem fahrzeugexternen Computersystem 102, die von den fahrzeuginternen Steuerungseinrichtungen 18a-18c genutzten kryptographischen Schlüssel 26a, 26b zu erzeugen. Dies erlaubt die Generierung der fahrzeugintern erzeugten Schlüssel 26a, 26b auch außerhalb des Fahrzeugs.

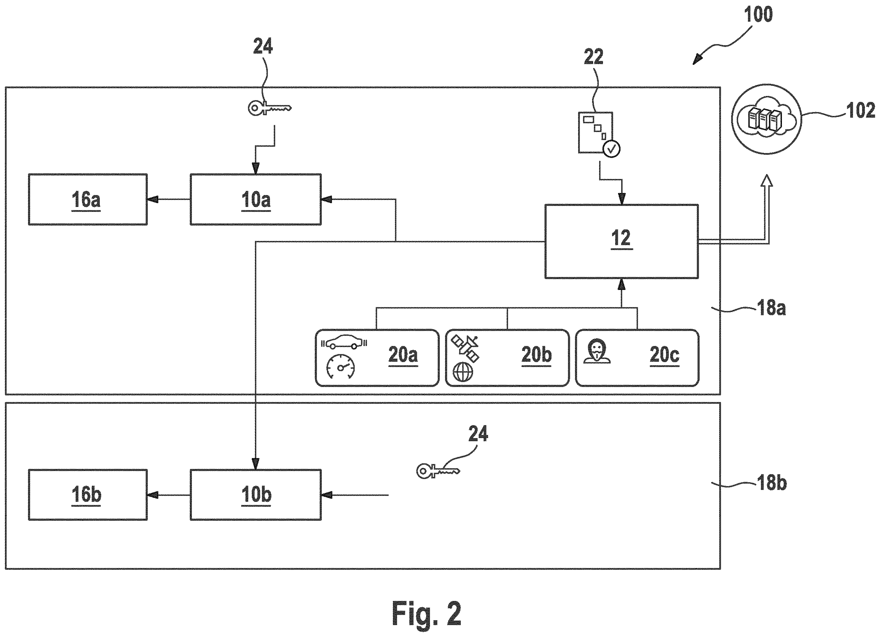

Das in der Fig. 2 dargestellte Kommunikationssystem 100 umfasst zwei separate Schlüsselerzeugungseinrichtungen 10a, 10b, wobei die Schlüsselerzeugungseinrichtung 10a Bestandteil der fahrzeuginternen Steuerungseinrichtung 18a und die Schlüsselerzeugungseinrichtung 10b Bestandteil der fahrzeuginternen Steuerungseinrichtung 18b ist. Den Schlüsselerzeugungseinrichtungen 10a, 10b wird das Geheimnis 24 bereitgestellt, wobei die Schlüsselerzeugungseinrichtungen 10a, 10b dazu eingerichtet sind, auf Grundlage des Geheimnisses 24 einen kryptographischen Schlüssel abzuleiten, wobei dieser direkt durch die jeweilige Steuerungseinrichtung 18a, 18b im Rahmen von Sicherheitsmaßnahmen 16a, 16b nutzbar ist.

Die Schlüsselerzeugungseinrichtungen 10a, 10b nutzen zum Erzeugen der jeweiligen Schlüssel beispielsweise eine Schlüsselableitfunktion. Ein Verteilen der erzeugten Schlüssel ist aufgrund der Integration der Schlüsselerzeugungseinrichtungen 10a, 10b in die fahrzeuginternen Steuerungseinrichtungen 18a, 18b nicht notwendig.

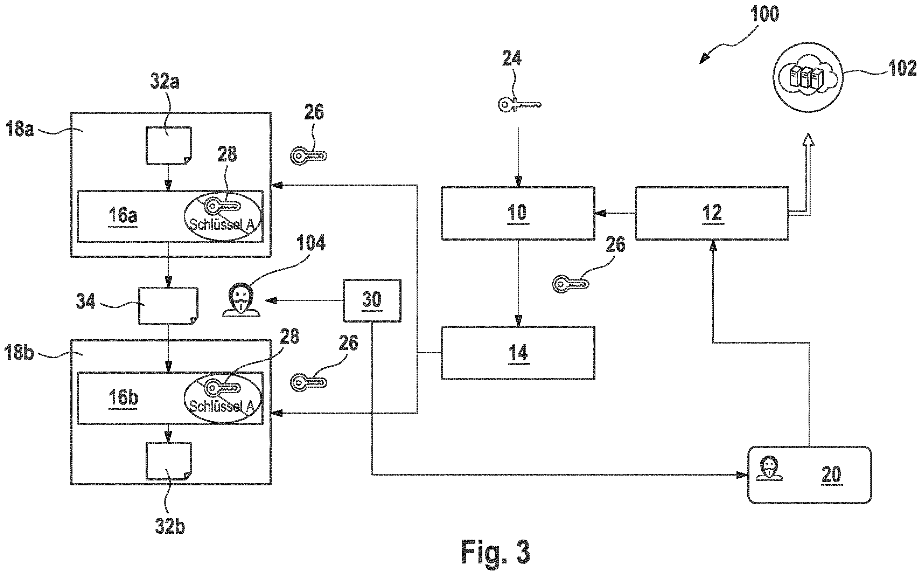

Die Fig. 3 zeigt ein fahrzeuginternes Kommunikationssystem 100, bei welchem zwei jeweils als electronic control unit (ECU) ausgebildete fahrzeuginterne Steuerungseinrichtungen 18a, 18b verschlüsselte und signierte Nachrichten 32a, 32b untereinander austauschen. Die Nachrichten 32a, 32b weisen dabei eine Kennzeichnung 34 auf, wie beispielsweise eine Chiffre oder ein MAC-Tag. Ein Eindringdetektor 30 dient zum Erfassen von Angriffen fahrzeugexterner Angreifer 104.

Über den Eindringdetektor 30 kann somit festgestellt werden, ob ein Sicherheitsereignis 20 (security incident) eingetreten ist, welches die Neugenerierung von Schlüsseln erfordert. Aufgrund des festgestellten Sicherheitsereignisses 20 veranlasst die Kontrolleinheit 12 die Erzeugung und Verteilung eines neuen kryptographischen Schlüssels 26, welchen die Steuerungseinrichtungen 18a, 18b zur weiteren Kommunikation untereinander verwenden können. Auf diese Weise erfolgt selbsttätig ein Austausch des alten Schlüssels 28 durch den neuen Schlüssel 26 bei den Steuerungseinrichtungen 18a, 18b, welcher durch die Detektion eines externen Angriffs verursacht wird.

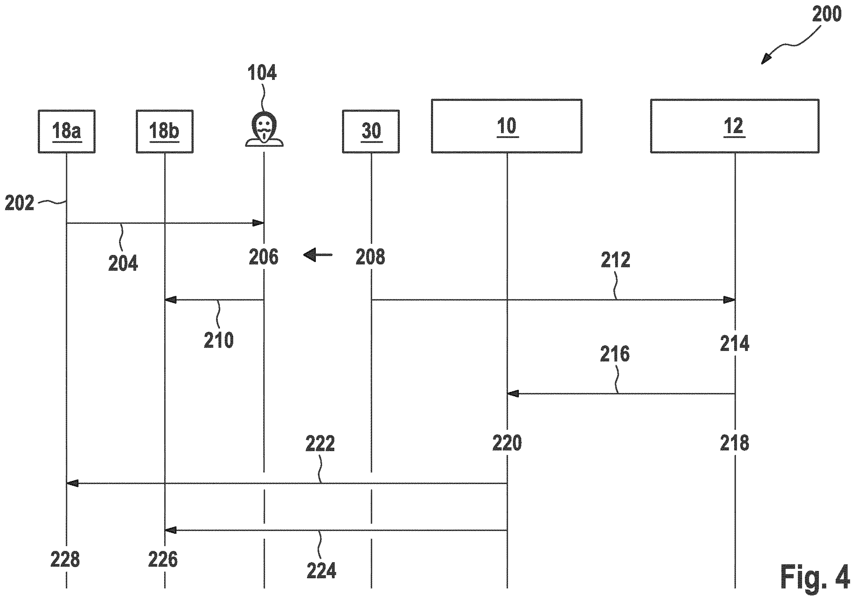

Das in der Fig. 4 dargestellte Ablaufdiagramm zeigt beispielhaft den Verfahrensablauf 200 während des Verfahrens zum fahrzeuginternen Verwalten von kryptographischen Schlüsseln.

Im Schritt 202 wird eine Nachricht von einer fahrzeuginternen Steuerungseinrichtung 18a verschlüsselt und signiert. Die Nachricht beinhaltet eine Kennzeichnung. Im Schritt 204 wird die Nachricht an die fahrzeuginterne Steuerungseinrichtung 18b gesendet, wobei die an die Steuerungseinrichtung 18b adressierte Nachricht im Schritt 206 von dem Angreifer 104 abgefangen und manipuliert wird. Die Manipulation wird im Schritt 208 von dem fahrzeuginternen Eindringdetektor 30 erfasst, wobei die manipulierte Nachricht im Schritt 210 von dem Angreifer 104 an die fahrzeuginterne Steuerungseinrichtung 18b gesendet wird.

Mit dem Schritt 212 wird die fahrzeuginterne Kontrolleinheit 12 von dem Eindringdetektor über den Angriff auf die Kommunikation zwischen der Steuerungseinrichtung 18a und der Steuerungseinrichtung 18b informiert. Im Anschluss identifiziert die Kontrolleinheit 12 im Schritt 214 den in der Kommunikation zwischen der Steuerungseinrichtung 18a und der Steuerungseinrichtung 18b verwendeten kryptographischen Schlüssel und veranlasst über einen entsprechenden Erzeugungsbefehl, welcher im Schritt 216 an die Schlüsselerzeugungseinrichtung 10 versendet wird, die Erzeugung eines neuen kryptographischen Schlüssels. Ferner wird im Schritt 218 ein fahrzeugexternes Computersystem darüber informiert, dass der zuvor zur Kommunikation zwischen der Steuerungseinrichtung 18a und der Steuerungseinrichtung 18b verwendete kryptographische Schlüssel nunmehr ungültig ist und ein neuer Schlüssel zum Austausch des ungültigen Schlüssels fahrzeugintern erzeugt wird.

Die Schlüsselerzeugungseinrichtung 10 nutzt nun ein zuvor bereitgestelltes und auf einem Speicher der Schlüsselerzeugungseinrichtung 10 hinterlegtes Geheimnis, um im Schritt 220 einen neuen kryptographischen Schlüssel zur Absicherung der Kommunikation zwischen der Steuerungseinrichtung 18a und der Steuerungseinrichtung 18b zu erzeugen. Über einen Schlüsselverteilprozess wird der erzeugte kryptographische Schlüssel im Schritt 222 der Steuerungseinrichtung 18a und im Schritt 224 der Steuerungseinrichtung 18b bereitgestellt.

Die Steuerungseinrichtung 18a ersetzt im Schritt 228 den zuvor verwendeten und nunmehr ungültigen kryptographischen Schlüssel durch neu erzeugten und von der Schlüsselerzeugungseinrichtung 10 bereitgestellten kryptographischen Schlüssel. Die Steuerungseinrichtung 18b ersetzt im Schritt 226 den zuvor verwendeten und nunmehr ungültigen kryptographischen Schlüssel durch neu erzeugten und von der Schlüsselerzeugungseinrichtung 10 bereitgestellten kryptographischen Schlüssel. Die Kommunikation zwischen der Steuerungseinrichtung 18a und der Steuerungseinrichtung 18b wird nunmehr über den neu erzeugten kryptographischen Schlüssel abgesichert.

Die Erfindung erlaubt somit eine automatische fahrzeuginterne Eliminierung von Sicherheitslücken, welche durch die Identifikation eines Schlüsselaustauschereignisses initiiert wird und keine weiteren Maßnahmen eines externen Technikers oder den Datenaustausch mit einem externen Computersystem erfordert.

### Bezugszeichenliste

- 10, 10a, 10b: Schlüsselerzeugungseinrichtungen
- 12: Kontrolleinheit
- 14: Verteileinrichtung
- 16a-16c: Sicherheitsmaßmaßen
- 18a-18c: Steuerungseinrichtungen
- 20, 20a-20c: Schlüsselaustauschereignisse
- 22: Autorisierungsinformationen
- 24, 24a, 24b: Geheimnisse
- 26, 26a, 26b: Schlüssel
- 28: alter Schlüssel
- 30: Eindringdetektor
- 32a, 32b: Nachrichten
- 34: Kennzeichnung
- 100: Kommunikationssystem
- 102: Computersystem
- 104: Angreifer
- 200: Verfahrensablauf
- 202-228: Verfahrensschritte

## Patentansprüche

1. Verfahren zum fahrzeuginternen Verwalten von kryptographischen Schlüsseln, umfassend die Schritte:
- Bereitstellen zumindest eines Geheimnisses (24, 24a, 24b) für eine fahrzeuginterne Schlüsselerzeugungseinrichtung (10, 10a, 10b); und
- Erzeugen zumindest eines neuen kryptographischen Schlüssels (26, 26a, 26b) durch die fahrzeuginterne Schlüsselerzeugungseinrichtung (10, 10a, 10b) auf Grundlage des zumindest einen Geheimnisses (24, 24a, 24b)
- Bereitstellen des zumindest einen neuen kryptographischen Schlüssels (26, 26a, 26b) für zumindest eine fahrzeuginterne Steuerungseinrichtung (18a-18c);
- Verwenden des zumindest einen neuen kryptographischen Schlüssels (26, 26a, 26b) durch die fahrzeuginterne Steuerungseinrichtung (18a-18c) bei kryptographischen und/oder nicht-kryptographischen Sicherheitsmaßmaßen (16a-16c), wobei
- das Erzeugen des zumindest einen neuen kryptographischen Schlüssels (26, 26a, 26b) und/oder das Bereitstellen des zumindest einen neuen kryptographischen Schlüssels (26, 26a, 26b) durch ein Schlüsselaustauschereignis (20, 20a-20c) oder eine Kombination von Schlüsselaustauschereignissen (20, 20a-20c) ausgelöst wird und/oder selbsttätig erfolgt und das Verfahren durch weitere Schritte gekennzeichnet ist, wobei
- das Schlüsselaustauschereignis von einer fahrzeuginternen Kontrolleinheit (12) erfasst wird, wobei die Kontrolleinheit (12) das Erzeugen des zumindest einen neuen kryptographischen Schlüssels (26, 26a, 26b) und/oder das Bereitstellen des zumindest einen neuen kryptographischen Schlüssels (26, 26a, 26b) initiiert,
wobei folgende weitere Schritte durchgeführt werden:
- Kontrollieren der Bereitstellung und der Verteilung von neuen kryptographischen Schlüsseln (26, 26a, 26b) an eine oder mehrere Steuerungseinrichtungen (18a-18c) durch die Kontrolleinheit (12);
- Anpassen der Bereitstellung und der Verteilung
von neuen kryptographischen Schlüsseln (26, 26a, 26b) an eine oder mehrere Steuerungseinrichtungen (18a-18c) durch die Kontrolleinheit (12).

2. Verfahren nach Anspruch 1,
**gekennzeichnet durch** zumindest einen der folgenden Schritte:
- Kontrollieren der durch die Schlüsselerzeugungseinrichtung (10, 10a, 10b) durchgeführten Schlüsselerzeugung durch die Kontrolleinheit (12);
- Anpassen der durch die Schlüsselerzeugungseinrichtung (10, 10a, 10b) durchgeführten Schlüsselerzeugung durch die Kontrolleinheit (12).

3. Verfahren nach einem der vorstehenden Ansprüche, **gekennzeichnet durch** den Schritt:
- Bereitstellen von Autorisierungsinformationen (22) für die fahrzeuginterne Schlüsselerzeugungseinrichtung (10, 10a, 10b);
wobei das Erzeugen des zumindest einen neuen kryptographischen Schlüssels (26, 26a, 26b) durch die fahrzeuginterne Schlüsselerzeugungseinrichtung (10, 10a, 10b) auch auf Grundlage der Autorisierungsinformationen (22) erfolgt.

4. Fahrzeuginternes Kommunikationssystem (100), mit
- einer Schlüsselerzeugungseinrichtung (10, 10a, 10b),
- einer Kontrolleinheit (12), und
- zumindest einer Steuerungseinrichtung (18a-18c);
**dadurch gekennzeichnet, dass** das Kommunikationssystem (100) dazu eingerichtet ist, das Verfahren zum fahrzeuginternen Verwalten von kryptographischen Schlüsseln (26, 26a, 26b) nach einem der Ansprüche 1 bis 3 auszuführen.

## Claims

1. Method for the vehicle-internal management of cryptographic keys, comprising the steps of:
- providing at least one secret (24, 24a, 24b) for a vehicle-internal key generation device (10, 10a, 10b); and
- generating at least one new cryptographic key (26, 26a, 26b) by means of the vehicle-internal key generation device (10, 10a, 10b) on the basis of the at least one secret (24, 24a, 24b),
- providing the at least one new cryptographic key (26, 26a, 26b) for at least one vehicle-internal control device (18a-18c);
- using the at least one new cryptographic key (26, 26a, 26b) by means of the vehicle-internal control device (18a-18c) in cryptographic and/or non-cryptographic security measures (16a-16c), wherein
- the generation of the at least one new cryptographic key (26, 26a, 26b) and/or the provision of the at least one new cryptographic key (26, 26a, 26b) is triggered by a key-exchange event (20, 20a-20c) or a combination of key-exchange events (20, 20a-20c), and/or takes place automatically, and the method is **characterized by** further steps, wherein
- the key-exchange event is captured by a vehicle-internal monitoring unit (12), wherein the monitoring unit (12) initiates the generation of the at least one new cryptographic key (26, 26a, 26b) and/or the provision of the at least one new cryptographic key (26, 26a, 26b),
wherein the following further steps are carried out:
- monitoring the provision and the distribution of new cryptographic keys (26, 26a, 26b) to one or more control devices (18a-18c) by means of the monitoring unit (12);
- adapting the provision and the distribution of new cryptographic keys (26, 26a, 26b) to one or more control devices (18a-18c) by means of the monitoring unit (12).

2. Method according to Claim 1, **characterized by** at least one of the following steps:
- monitoring the key generation carried out by the key generation device (10, 10a, 10b) by means of the monitoring unit (12);
- adapting the key generation carried out by the key generation device (10, 10a, 10b) by means of the monitoring unit (12).

3. Method according to one of the preceding claims, **characterized by** the step of:
- providing authorization information (22) for the vehicle-internal key generation device (10, 10a, 10b);
wherein the at least one new cryptographic key (26, 26a, 26b) is also generated by the vehicle-internal key generation device (10, 10a, 10b) on the basis of the authorization information (22).

4. Vehicle-internal communication system (100), with
- a key generation device (10, 10a, 10b),
- a monitoring unit (12), and
- at least one control device (18a-18c), **characterized in that** the communication system (100) is configured to carry out the method for the vehicle-internal management of cryptographic keys (26, 26a, 26b) according to one of Claims 1 to 3.

## Revendications

1. Procédé de gestion de clés cryptographiques à l'intérieur d'un véhicule, comprenant les étapes suivantes :
- fournir au moins un secret (24, 24a, 24b) à un dispositif (10, 10a, 10b) de génération de clés interne au véhicule ; et
- générer au moins une nouvelle clé cryptographique (26, 26a, 26b) par le dispositif (10, 10a, 10b) de génération de clés interne au véhicule sur la base dudit au moins un secret (24, 24a, 24b) ;
- fournir ladite au moins une nouvelle clé cryptographique (26, 26a, 26b) à au moins un dispositif de commande (18a-18c) interne au véhicule ;
- utiliser ladite au moins une nouvelle clé cryptographique (26, 26a, 26b) par le dispositif de commande (18a-18c) interne au véhicule dans des mesures de sécurité (16a-16c) cryptographiques et/ou non cryptographiques,
- la génération de ladite au moins une nouvelle clé cryptographique (26, 26a, 26b) et/ou la mise à disposition d'au moins une nouvelle clé cryptographique (26, 26a, 26b) étant déclenchée par un événement (20, 20a-20c) d'échange de clé ou une combinaison d'événements (20, 20a-20c) d'échange de clé et/ou s'effectuant de manière automatique, et le procédé étant **caractérisé par** d'autres étapes,
- l'événement d'échange de clé étant détecté par une unité de contrôle (12) interne au véhicule, l'unité de contrôle (12) initiant la génération d'au moins une nouvelle clé cryptographique (26, 26a, 26b) et/ou la fourniture d'au moins une nouvelle clé cryptographique (26, 26a, 26b),
les étapes supplémentaires suivantes étant mises en œuvre :
- contrôler, par l'unité de contrôle (12), la fourniture et la distribution de nouvelles clés cryptographiques (26, 26a, 26b) à un ou plusieurs dispositifs de commande (18a-18c) ;
- ajuster, par l'unité de contrôle (12), la fourniture et la distribution de nouvelles clés cryptographiques (26, 26a, 26b) à un ou plusieurs dispositifs de commande (18a-18c).

2. Procédé selon la revendication 1, **caractérisé par** au moins une des étapes suivantes :
- contrôler, par l'unité de contrôle (12), la génération de clé effectuée par le dispositif (10, 10a, 10b) de génération de clés ;
- adapter, par l'unité de contrôle (12), la génération de clé effectuée par le dispositif (10, 10a, 10b) de génération de clés.

3. Procédé selon l'une des revendications précédentes, **caractérisé par** l'étape suivante :
- fournir des informations d'autorisation (22) au dispositif (10, 10a, 10b) de génération de clé interne véhicule ;
la génération de ladite au moins une nouvelle clé cryptographique (26, 26a, 26b) par le dispositif (10, 10a, 10b) de génération de clés interne au véhicule étant également basée sur les informations d'autorisation (22).

4. Système de communication (100) interne à un véhicule, comprenant
- un dispositif (10, 10a, 10b) de génération de clés,
- une unité de contrôle (12), et
- au moins un dispositif de commande (18a-18c) ; **caractérisé en ce que** le système de communication (100) est adapté pour mettre en œuvre le procédé de gestion interne au véhicule de clés cryptographiques (26, 26a, 26b) selon l'une des revendications 1 à 3.
